# EUROPÄISCHE PATENTSCHRIFT

(11) **EP 3 216 628 B1**
(45) Veröffentlichungstag und Bekanntmachung des Hinweises auf die Patenterteilung: **30.10.2019**
(21) Anmeldenummer: 17158421.2
(22) Anmeldetag: 28.02.2017
(51) Int. Cl.: B60C 23/00

(54) **EINRICHTUNG ZUR REIFENFÜLLDRUCKÜBERWACHUNG**
DEVICE FOR MONITORING TYRE PRESSURE
DISPOSITIF DE SURVEILLANCE DE PRESSION DE PNEUS

(30) Priorität: 07.03.2016 DE 102016203689
(43) Veröffentlichungstag der Anmeldung: 13.09.2017
(73) Patentinhaber: Deere & Company, Moline, IL 61265 (US)
(72) Erfinder: Baum, Bernd, 68163 Mannheim (DE); Schott, Florian, 68163 Mannheim (DE); Reinmuth, Florian, 68163 Mannheim (DE)
(74) Vertreter: Dehnhardt, Florian Christopher

(56) Entgegenhaltungen:
- DE-A1-102013 106 548
- DE-A1-102015 206 239
- DE-U1-202011 051 292
- US-A1- 2013 046 439
- US-B1- 6 218 935

## Beschreibung

Die Erfindung betrifft eine Einrichtung zur Reifenfülldrucküberwachung eines Fahrzeugsystems, mit wenigstens einem Fahrzeugreifen, der mit einer Reifenfüllanlage zur Anpassung eines Reifeninnendrucks kommuniziert, und einer Kontrolleinheit, die einen für den Reifeninnendruck einzuhaltenden Sollwert nach Maßgabe wenigstens einer äußeren Steuergröße berechnet.

In diesem Zusammenhang geht aus der US 7 302 837 B2 eine zentrale Reifenfüllanlage für ein an einem landwirtschaftlichen Traktor angebrachtes landwirtschaftliches Anbaugerät hervor, bei der abhängig von einer ermittelten Bodenbeschaffenheit einer befahrenen Ackeroberfläche ein mit der zentralen Reifenfüllanlage in einen Anbaugerätereifen einzusteuernder Reifeninnendruck bestimmt wird. Die Ermittlung der Bodenbeschaffenheit erfolgt unter anderem auf Grundlage kartografischer Bodendaten, die mit der aktuellen Position des landwirtschaftlichen Anbaugeräts in Beziehung gesetzt werden. Die aktuelle Position des landwirtschaftlichen Anbaugeräts wird beispielsweise von Seiten eines in dem landwirtschaftlichen Traktor vorgesehenen GPS-Navigationssystems bereitgestellt.

Weitere Einrichtungen zur Reifenfüllüberwachung von Traktoren mit Anbaugerät sind bekannt aus US 2013/046439 A1, US 7 302 837 B2 und DE 102011085040 A1.

Im Falle großvolumiger Fahrzeugreifen, wie sie im landwirtschaftlichen Bereich gängig sind, können die zur Einsteuerung des jeweiligen Reifeninnendrucks von der Reifenfüllanlage durchzuführenden Druckregeleingriffe Zeiten bis in den Minutenbereich in Anspruch nehmen. Der genaue Zeitumfang hängt hierbei von der Druckregelgeschwindigkeit der verwendeten Reifenfüllanlage, maßgeblich von der Füllkapazität eines von dieser umfassten Luftkompressors ab. Dieser Umstand erlangt insbesondere beim Verlassen eines Ackers sowie der anschließenden Aufnahme einer Straßenfahrt Bedeutung, nämlich dann, wenn der Acker zur Erhöhung der Traktion mit reduziertem Reifeninnendruck befahren wird und dieser vor Beginn der Straßenfahrt zunächst auf einen hierfür zulässigen Sollwert anzuheben ist. In diesem Fall ergeben sich aufgrund des auszuführenden Reifenfüllvorgangs unerwünschte Verzögerungen, während derer eine unterbrechungsfreie Weiterfahrt nicht ohne weiteres möglich ist.

Es ist daher Aufgabe der vorliegenden Erfindung, eine Einrichtung der eingangs genannten Art dahingehend weiterzubilden, dass unerwünschte Verzögerungen, die aufgrund von Druckregeleingriffen der Reifenfüllanlage verursacht werden, vermieden oder zumindest merklich verringert werden.

Diese Aufgabe wird durch eine Einrichtung zur Reifenfülldrucküberwachung eines Fahrzeugsystems mit den Merkmalen des Patentanspruchs 1 gelöst.

Die Einrichtung zur Reifenfülldrucküberwachung eines Fahrzeugsystems umfasst wenigstens einen Fahrzeugreifen, der mit einer Reifenfüllanlage zur Anpassung eines Reifeninnendrucks kommuniziert, und eine Kontrolleinheit, die einen für den Reifeninnendruck einzuhaltenden Sollwert nach Maßgabe wenigstens einer äußeren Steuergröße berechnet. Erfindungsgemäß passt die Kontrolleinheit den berechneten Sollwert in Abhängigkeit einer aus Betriebszustandsgrößen des Fahrzeugsystems abgeleiteten Betriebszustandsklassifizierung an, wobei die Kontrolleinheit eine mit der abgeleiteten Betriebszustandsklassifizierung korrelierende Geoposition des Fahrzeugsystems ermittelt und diese mitsamt der Betriebszustandsklassifizierung in einer Speichereinheit ablegt, um bei Erkennung einer erneuten Annäherung des Fahrzeugsystems an die abgespeicherte Geoposition die zugehörige Betriebszustandsklassifizierung zum Zwecke der vorausschauenden Anpassung des Sollwerts des Reifeninnendrucks aus der Speichereinheit abzurufen.

Auf diese Weise ist es möglich, durch Berücksichtigung einer entsprechenden Vorsteuerzeit unerwünschte Verzögerungen aufgrund von Druckregeleingriffen der Reifenfüllanlage zu vermeiden oder zumindest merklich zu verringern. So kann beim Verlassen eines Ackers zur Aufnahme einer anschließenden Straßenfahrt der Reifenfüllvorgang bereits vor Erreichen der Straße eingeleitet und abgeschlossen werden, sodass eine unterbrechungsfreie Weiterfahrt gewährleistet ist.

Die benötigte Vorsteuerzeit hängt unter anderem von der spezifischen Druckregelgeschwindigkeit der verwendeten Reifenfüllanlage sowie vom Betrag des insofern auf- bzw. abzubauenden Reifeninnendrucks ab. Durch Einbeziehung der vorgenannten Parameter lässt sich die Vorsteuerzeit weiter präzisieren.

Vorteilhafte Weiterbildungen der Einrichtung zur Reifenfülldrucküberwachung gehen aus den Unteransprüchen hervor.

Vorzugsweise handelt es sich bei der äußeren Steuergröße um eine Lastgröße, die eine an zugehörigen Achsgruppen des Fahrzeugsystems auftretende Achslast charakterisiert. Die Achslast hängt einerseits vom Leergewicht sowie der zugehörigen Schwerpunktlage des Fahrzeugsystems (invariabler Lastanteil) und andererseits von einer möglichen Zuladung sowie deren Verteilung (variabler Lastanteil) ab. Je höher die Achslast an einer bestimmten Achsgruppe ist, umso höher wird im Allgemeinen der einzusteuernde Reifeninnendruck zu wählen sein.

Die Kontrolleinheit kann die Lastgröße auf Grundlage lastspezifischer Fahrzeuggrößen ableiten. Im Falle eines aus einem landwirtschaftlichen Traktor sowie einem landwirtschaftlichen Anbaugerät bestehenden Fahrzeugsystems können die lastspezifischen Fahrzeuggrößen insbesondere eine für das jeweilige Traktormodell spezifische Achslastverteilung, geometrische Eigenschaften eines zur Anbringung des landwirtschaftlichen Anbaugeräts vorgesehenen Krafthebers oder Kupplungssystems, und/oder Informationen über Gewicht und Schwerpunktlage des landwirtschaftlichen Anbaugeräts betreffen. Bei dem Kraftheber handelt es sich typischerweise um einen hydraulisch betätigbaren Dreipunkt-Geräteanbau, der sich im Heck- oder Frontbereich des landwirtschaftlichen Traktors befindet. Dessen geometrische Eigenschaften ergeben sich hierbei aus den Hebelverhältnissen der Kraftheberkomponenten wie Unter- und Oberlenker, hydraulischer Hubzylinder, Hubarme, Hubspindeln, und dergleichen. Das Kupplungssystem kann hingegen als Zugpendel oder Kupplungsmaul ausgebildet sein, in das sich ein gezogenes Anbaugerät einhängen lässt.

Die Informationen über Gewicht und Schwerpunktlage des landwirtschaftlichen Anbaugeräts können aus einer in der Speichereinheit abgelegten Konfigurationsdatei entweder manuell über eine Benutzerschnittstelle oder aber selbsttätig bei Anbringung des landwirtschaftlichen Anbaugeräts durch berührungsloses Auslesen einer funkbasierten Anbaugerätekennung oder - für den Fall eines ISOBUS-fähigen landwirtschaftlichen Anbaugeräts - durch Abrufen eines ISOBUS-Identifiers ausgewählt werden.

Je nach Anbaugerätetyp können Gewicht und Schwerpunktlage des landwirtschaftlichen Anbaugeräts zeitlich veränderlich sein. Dies ist beispielsweise bei Düngerstreuern, Sämaschinen oder Spritzgeräten der Fall, da hier die Zuladung in einem zugehörigen Reservoir während des Betriebs mit der Zeit abnimmt. Dementsprechend besteht die Möglichkeit, dass die Ableitung der lastspezifischen Fahrzeuggrößen unter anderem durch sensorische Erfassung der am Kraftheber angreifenden Kräfte bzw. Momente unter Berücksichtigung der geometrischen Eigenschaften des Krafthebers erfolgt. Zusätzlich oder alternativ kann auch eine sensorische Füllstandsmessung an dem vom landwirtschaftlichen Anbaugerät umfassten Reservoir erfolgen.

Die äußere Steuergröße kann ferner durch auf den wenigstens einen Fahrzeugreifen bezogene Reifeneigenschaften charakterisiert sein. Die Reifeneigenschaften können insbesondere - ihrerseits vom Reifeninnendruck abhängige - Informationen hinsichtlich der Reifengeometrie des verwendeten Reifenmodells, einer zulässigen Traglast, eines minimal bzw. maximal zulässigen Reifeninnendrucks, und/oder des Abrollverhaltens betreffen. Die betreffenden Angaben werden seitens des Reifenherstellers zur Verfügung gestellt und können in der Speichereinheit hinterlegt sein, sodass sich diese entweder manuell über die Benutzerschnittstelle durch Eingabe des jeweiligen Reifenmodells oder aber berührungslos durch Auslesen einer in dem Reifenmantel eingebetteten funkbasierten Reifenkennung abrufen lassen.

Bevorzugt leitet die Kontrolleinheit die Betriebszustandsklassifizierung aus Betriebszustandsgrößen ab, die für das Auftreten von Betriebszuständen des Fahrzeugsystems mit einem hierfür spezifischen Reifeninnendruck charakteristisch sind. Für den bereits erwähnten Fall eines aus einem landwirtschaftlichen Traktor sowie einem landwirtschaftlichen Anbaugerät bestehenden Fahrzeugsystems können die Betriebszustandsgrößen unter anderem die Beschaffenheit der befahrenen Bodenoberfläche, eine aktuelle Fortbewegungsgeschwindigkeit des Fahrzeugsystems, für die Durchführung bestimmter hydraulischer Arbeitsfunktionen des landwirtschaftlichen Anbaugeräts charakteristische Steuerventilstellungen bzw. -sequenzen und/oder auf bestimmte Arbeitsabläufe hinweisende Bedienanforderungen des Fahrers oder eines Fahrerassistenzsystems wiedergeben. Ausgehend von den vorgenannten Betriebszustandsgrößen lässt sich ein an Eigenschaften des befahrenen Untergrunds sowie der Art der verrichteten Arbeiten angepasster Reifeninnendruck wählen. So ist im Falle einer Transportfahrt auf der Straße im Allgemeinen ein höherer Reifeninnendruck wünschenswert als beim Befahren einer (aufgeweichten) Ackeroberfläche, auf der eine erhöhte Traktion durch Vergrößerung der Reifenkontaktfläche wünschenswert ist. Die Beschaffenheit der befahrenen Bodenoberfläche kann hierbei sensorisch erfasst, manuell über die Benutzerschnittstelle vom Fahrer eingegeben und/oder aus kartografischen Informationen durch Abgleich mit der ermittelten Geoposition des Fahrzeugsystems bestimmt werden. Eine sensorische Erfassung ist beispielsweise mittels eines Nahinfrarot-Sensorsystems möglich.

Auch ist es denkbar, dass die Kontrolleinheit aus dem für den Reifeninnendruck berechneten Sollwert eine Handlungsempfehlung für die manuelle Betätigung der Reifenfüllanlage ableitet und über die Benutzerschnittstelle - rechtzeitig unter Beachtung der benötigten Vorsteuerzeit - ausgibt.

Alternativ kann die Kontrolleinheit aus dem für den Reifeninnendruck berechneten Sollwert einen Steuerbefehl zur fahrerunabhängigen Betätigung der Reifenfüllanlage erzeugen. Die Einsteuerung des entsprechenden Reifeninnendrucks in den wenigstens einen Fahrzeugreifen erfolgt in diesem Fall automatisch nach Maßgabe der benötigten Vorsteuerzeit.

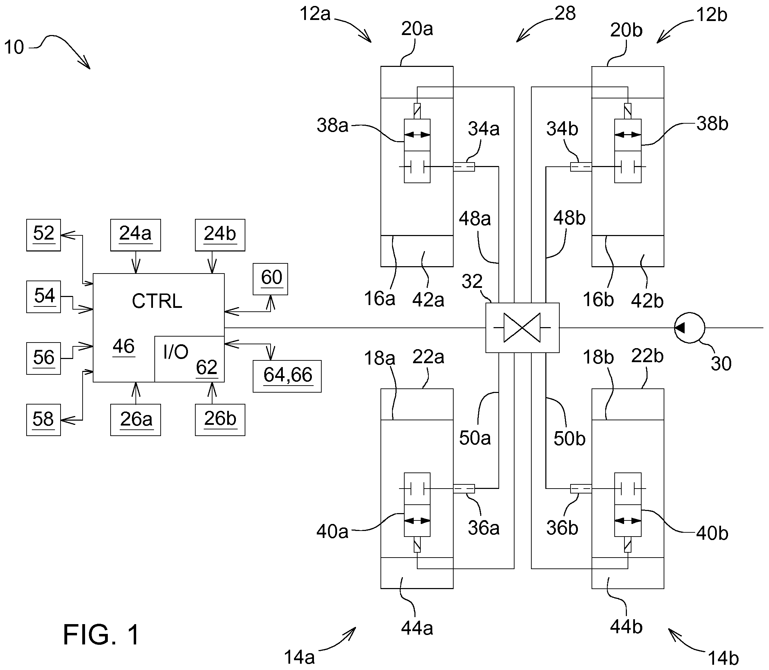

Die erfindungsgemäße Einrichtung zur Reifenfülldrucküberwachung eines Fahrzeugsystems wird im Folgenden anhand der beigefügten Zeichnung näher erläutert.

Die einzige Figur zeigt ein als Blockschaltbild dargestelltes Ausführungsbeispiel der erfindungsgemäßen Einrichtung zur Reifenfülldrucküberwachung eines aus einem landwirtschaftlichen Traktor sowie einem daran angebrachten landwirtschaftlichen Anbaugerät bestehenden (nicht dargestellten) Fahrzeugsystems. Die Anbringung des landwirtschaftlichen Anbaugeräts erfolgt hierbei an einem als hydraulisch betätigbarer Dreipunkt-Geräteanbau ausgebildeten Kraftheber, der sich im Heck- oder Frontbereich des landwirtschaftlichen Traktors befindet.

Die Einrichtung 10 umfasst linke und rechte Vorderräder 12a, 12b sowie linke und rechte Hinterräder 14a, 14b. Jedes der Vorder- und Hinterräder 12a, 12b, 14a, 14b weist eine Felge 16a, 16b, 18a, 18b sowie einen auf der Felge 16a, 16b, 18a, 18b montierten Fahrzeugreifen 20a, 20b, 22a, 22b auf. Jedem der Fahrzeugreifen 20a, 20b, 22a, 22b ist ein Drucksensor 24a, 24b, 26a, 26b zur Erfassung eines jeweiligen Reifeninnendrucks zugeordnet, der sich mittels einer mit den Fahrzeugreifen 20a, 20b, 22a, 22b kommunizierenden und zu diesem Zweck elektrisch steuerbaren Reifenfüllanlage 28 anpassen lässt.

Die Reifenfüllanlage 28 ermöglicht eine radindividuelle Variation des Reifeninnendrucks. Hierzu weist die Reifenfüllanlage 28 eine aus einem Luftkompressor 30 gespeiste zentrale Steuerventilanordnung 32 auf, die mit den Fahrzeugreifen 20a, 20b, 22a, 22b über jeweilige Drehdurchführungen 34a, 34b, 36a, 36b sowie nachgeschaltete Radventile 38a, 38b, 40a, 40b in Verbindung steht, was es erlaubt, eine gezielte Anpassung des Reifeninnendrucks innerhalb einer durch den Fahrzeugreifen 20a, 20b, 22a, 22b gebildeten Reifeninnenkammer 42a, 42b, 44a, 44b vorzunehmen.

Des Weiteren umfasst die Einrichtung 10 eine mikroprozessorgesteuerte Kontrolleinheit 46, die mit den Drucksensoren 24a, 24b, 26a, 26b sowie der Reifenfüllanlage 28 kommuniziert. Die Kontrolleinheit 46 bildet gemeinsam mit den Drucksensoren 24a, 24b, 26a, 26b sowie der Reifenfüllanlage 28 einen Regelkreis für einen für den Reifeninnendruck einzuhaltenden Sollwert.

Die Drucksensoren 24a, 24b, 26a, 26b können in einen Reifenmantel des jeweiligen Fahrzeugreifens 20a, 20b, 22a, 22b eingebettet sein und über eine drahtlose Datenstrecke mit der Kontrolleinheit 46 in Verbindung stehen. Vorliegend wird jedoch eine drahtgebundene Kommunikation bevorzugt, bei der die Drucksensoren 24a, 24b, 26a, 26b fahrzeugfest angebracht sind, um die zwischen der zentralen Steuerventilanordnung 32 und den Drehdurchführungen 34a, 34b, 36a, 36b in zugehörigen Versorgungsleitungen 48a, 48b, 50a, 50b herrschenden Druckverhältnisse zu erfassen. Die Radventile 38a, 38b, 40a, 40b sind in inaktivem Zustand geschlossen, sodass diese von der Kontrolleinheit 46 zur Messung des Reifeninnendrucks kurzzeitig geöffnet werden, sodass der zu messende Reifeninnendruck in der betreffenden Versorgungsleitung 48a, 48b, 50a, 50b anliegt. Abweichend davon kann auch ein einzelner (nicht dargestellter) Drucksensor in der zentralen Steuerventilanordnung 32 untergebracht sein, wobei dieser durch aufeinanderfolgendes Öffnen der Radventile 38a, 38b, 40a, 40b sequentiell mit dem zu messenden Reifeninnendruck beaufschlagt wird.

Zusätzlich steht die Kontrolleinheit 46 mit einer als berührungsempfindlicher Bildschirm ausgebildeten Benutzerschnittstelle 52, einem GPS-Navigationssystem 54 zur Ermittlung einer aktuellen Geoposition des Fahrzeugsystems, einem Nahinfrarot-Sensorsystem 56 zur sensorischen Erfassung der Beschaffenheit der befahrenen Bodenoberfläche, einer im Heck- und/oder Frontbereich des landwirtschaftlichen Traktors angeordneten RFID-Leseeinheit 58, sowie einer les- und beschreibbaren Speichereinheit 60 in Verbindung. Eine in der Kontrolleinheit 46 vorgesehene Schnittstelle 62 ermöglicht ferner einen Datenaustausch mit einem CAN-Bus 64 und/oder einem ISOBUS 66 des Fahrzeugsystems.

Die Funktionsweise der Einrichtung 10 soll nachfolgend unter Bezugnahme auf das in der Figur wiedergegebene Blockschaltbild dargestellt werden.

Die Kontrolleinheit 46 ermittelt bei Inbetriebnahme des Fahrzeugsystems zunächst eine erste äußere Steuergröße. Bei der ersten äußeren Steuergröße handelt es sich um eine Lastgröße, die eine an zugehörigen Achsgruppen 68, 70 des Fahrzeugsystems auftretende Achslast charakterisiert. Im Falle eines räderlosen landwirtschaftlichen Anbaugeräts bezieht sich die Lastgröße ausschließlich auf die beiden Achsgruppen des landwirtschaftlichen Traktors mit ihren jeweiligen Vorder- und Hinterrädern 12a, 12b, 14a, 14b.

Die Achslast hängt einerseits vom Leergewicht sowie der zugehörigen Schwerpunktlage des Fahrzeugsystems und andererseits von einer möglichen Zuladung sowie deren Verteilung ab.

Die Kontrolleinheit 46 leitet die Lastgröße auf Grundlage lastspezifischer Fahrzeuggrößen ab. Beispielsgemäß betreffen die lastspezifischen Fahrzeuggrößen eine für das jeweilige Traktormodell spezifische Achslastverteilung, geometrische Eigenschaften des zur Anbringung des landwirtschaftlichen Anbaugeräts vorgesehenen Krafthebers, und/oder Informationen über Gewicht und Schwerpunktlage des landwirtschaftlichen Anbaugeräts.

Die Informationen über Gewicht und Schwerpunktlage des landwirtschaftlichen Anbaugeräts werden aus einer in der Speichereinheit 60 abgelegten Konfigurationsdatei entweder manuell über die Benutzerschnittstelle 52 oder aber selbsttätig bei Anbringung des landwirtschaftlichen Anbaugeräts durch berührungsloses Auslesen einer RFID-basierten Anbaugerätekennung mittels der RFID-Leseeinheit 58 ausgewählt und an die Kontrolleinheit 46 übermittelt. Optional erfolgt bei einem ISOBUS-fähigen landwirtschaftlichen Anbaugerät eine selbsttätige Auswahl durch Abrufen eines ISOBUS-Identifiers über die in der Kontrolleinheit 46 vorgesehene Schnittstelle 62.

Je nach Anbaugerätetyp können Gewicht und Schwerpunktlage des landwirtschaftlichen Anbaugeräts zeitlich veränderlich sein. Dies ist beispielsweise bei Düngerstreuern, Sämaschinen oder Spritzgeräten der Fall, da hier die Zuladung in einem zugehörigen Reservoir während des Betriebs mit der Zeit abnimmt. Die Ableitung der lastspezifischen Fahrzeuggröße erfolgt hier durch sensorische Erfassung der am Kraftheber angreifenden Kräfte bzw. Momente unter Berücksichtigung der als bekannt vorausgesetzten Hebelverhältnisse der Kraftheberkomponenten. Zusätzlich oder alternativ wird eine sensorische Füllstandmessung an dem von dem landwirtschaftlichen Anbaugerät umfassten Reservoir durchgeführt, wobei der jeweilige Füllstand in Form entsprechender Daten auf dem ISOBUS 66 des Fahrzeugsystems zur Verfügung steht und über die Schnittstelle 62 an die Kontrolleinheit 46 übermittelt wird.

Des Weiteren ermittelt die Kontrolleinheit 46 eine zweite äußere Steuergröße. Die zweite äußere Steuergröße ist durch auf die Fahrzeugreifen 20a, 20b, 22a, 22b bezogene Reifeneigenschaften charakterisiert. Die Reifeneigenschaften betreffen - ihrerseits vom Reifeninnendruck abhängige - Informationen hinsichtlich der Reifengeometrie des verwendeten Reifenmodells, einer zulässigen Traglast, eines minimal bzw. maximal zulässigen Reifeninnendrucks, und/oder des Abroll- bzw. Traktionsverhaltens. Die hierfür notwendigen Angaben werden seitens des Reifenherstellers zur Verfügung gestellt und sind in der Speichereinheit 60 abgelegt, sodass sich diese entweder manuell über die Benutzerschnittstelle 52 durch Eingabe des jeweiligen Reifenmodells oder aber durch berührungsloses Auslesen einer in dem Reifenmantel eingebetteten RFID-basierten Reifenkennung mittels der RFID-Leseeinheit 58 abrufen und an die Kontrolleinheit 46 übermitteln lassen.

Ausgehend von der ermittelten ersten und zweiten äußeren Steuergröße berechnet die Kontrolleinheit 46 einen für den Reifeninnendruck einzuhaltenden Sollwert. Um der bei landwirtschaftlichen Traktoren für die Vor- und Hinterräder in aller Regel unterschiedlichen Reifengeometrie Rechnung zu tragen, wird dieser für jede der beiden Achsgruppen individuell angepasst.

Der so berechnete Sollwert wird von der Kontrolleinheit 46 zusätzlich in Abhängigkeit einer aus Betriebszustandsgrößen des Fahrzeugsystems abgeleiteten Betriebszustandsklassifizierung angepasst.

Die Kontrolleinheit 46 führt die Betriebszustandsklassifizierung auf Grundlage von Betriebszustandsgrößen durch, die für das Auftreten von Betriebszuständen des Fahrzeugsystems mit einem hierfür spezifischen Reifeninnendruck charakteristisch sind. Für den vorliegenden Fall eines aus einem landwirtschaftlichen Traktor sowie einem landwirtschaftlichen Anbaugerät bestehenden Fahrzeugsystems geben die Betriebszustandsgrößen die Beschaffenheit der befahrenen Bodenoberfläche, eine aktuelle Fortbewegungsgeschwindigkeit des Fahrzeugsystems, für die Durchführung bestimmter hydraulisch ausgeführter Arbeitsfunktionen des landwirtschaftlichen Anbaugeräts charakteristische Steuerventilstellungen bzw. - sequenzen, und/oder auf bestimmte Arbeitsabläufe hinweisende Bedienanforderungen des Fahrers oder eines Fahrerassistenzsystems wieder. Ausgehend von den vorgenannten Betriebszustandsgrößen, die als entsprechende Daten auf dem CAN-Datenbus 64 zur Verfügung stehen, wählt die Kontrolleinheit 46 einen an Eigenschaften des befahrenen Untergrunds sowie der Art der verrichteten Arbeiten angepassten Sollwert für den Reifeninnendruck.

Die Beschaffenheit der befahrenen Bodenoberfläche wird sensorisch mittels des Nahinfrarot-Sensorsystems 56 erfasst, manuell über die Benutzerschnittstelle 52 eingegeben und/oder aus kartografischen Informationen durch Abgleich mit einer seitens des GPS-Navigationssystems 54 ermittelten Geoposition des Fahrzeugsystems bestimmt.

Aus dem für den Reifeninnendruck berechneten Sollwert leitet die Kontrolleinheit 46 schließlich eine Handlungsempfehlung für die manuelle Betätigung der Reifenfüllanlage 28 ab und gibt diese über die Benutzerschnittstelle 52 in Form eines entsprechenden Texthinweises aus. Alternativ erzeugt die Kontrolleinheit 46 einen Steuerbefehl zur fahrerunabhängigen Betätigung der Reifenfüllanlage 28. Die Einsteuerung des entsprechenden Reifeninnendrucks in den wenigstens einen Fahrzeugreifen erfolgt in diesem Fall automatisch nach Maßgabe der benötigten Vorsteuerzeit.

Zugleich ermittelt die Kontrolleinheit 46 eine mit der durchgeführten Betriebszustandsklassifizierung korrelierende Geoposition des Fahrzeugsystems und legt diese mitsamt der Betriebszustandsklassifizierung in der Speichereinheit 60 ab. Die Geoposition wird seitens des GPS-Navigationssystems 54 bereitgestellt. Erkennt die Kontrolleinheit 46 während des Betriebs des Fahrzeugsystems eine erneute Annäherung an die abgespeicherte Geoposition, so ruft diese die zugehörige Betriebszustandsklassifizierung zum Zwecke der vorausschauenden Anpassung des Sollwerts des Reifeninnendrucks aus der Speichereinheit 60 ab. Die darauf basierende - und vorstehend ihrem Grundsatz nach bereits beschriebene - Ausgabe der Handlungsempfehlung bzw. Erzeugung des Steuerbefehls zum Zwecke der Einsteuerung des dem Sollwert entsprechenden Reifeninnendrucks erfolgt dann unter Beachtung einer entsprechenden Vorsteuerzeit, die derart bemessen wird, dass unerwünschte Verzögerungen aufgrund von Druckregeleingriffen der Reifenfüllanlage vermieden oder zumindest merklich verringert werden.

Die benötigte Vorsteuerzeit hängt unter anderem von der spezifischen Füll- bzw. Ablassgeschwindigkeit der Reifenfüllanlage 28 sowie vom Betrag des auf- bzw. abzubauenden Reifeninnendrucks ab. Durch Einbeziehung der vorgenannten Parameter wird die Vorsteuerzeit weiter präzisiert.

Schließlich sei angemerkt, dass anstelle einer RFID-basierten Anbaugeräte- bzw. Reifenkennung auch ein beliebiges anderes drahtloses Identifikationsmittel vorgesehen sein kann, das beispielsweise auf der Verwendung von Bluetooth-Transpondern beruht.

## Patentansprüche

1. Einrichtung zur Reifenfülldrucküberwachung eines aus einem landwirtschaftlichen Traktor sowie einem landwirtschaftlichen Anbaugerät bestehenden Fahrzeugsystems, mit wenigstens einem Fahrzeugreifen (20a, 20b, 22a, 22b), der mit einer Reifenfüllanlage (28) zur Anpassung eines Reifeninnendrucks kommuniziert, und einer Kontrolleinheit (46), die einen für den Reifeninnendruck einzuhaltenden Sollwert nach Maßgabe wenigstens einer äußeren Steuergröße berechnet, wobei die Kontrolleinheit (46) den berechneten Sollwert in Abhängigkeit einer aus Betriebszustandsgrößen des Fahrzeugsystems abgeleiteten Betriebszustandsklassifizierung anpasst, wobei die Kontrolleinheit (46) eine mit der abgeleiteten Betriebszustandsklassifizierung korrelierende Geoposition des Fahrzeugsystems ermittelt und diese mitsamt der Betriebszustandsklassifizierung in einer Speichereinheit (60) ablegt, um bei Erkennung einer erneuten Annäherung des Fahrzeugsystems an die abgespeicherte Geoposition die zugehörige Betriebszustandsklassifizierung zum Zwecke der vorausschauenden Anpassung des Sollwerts des Reifeninnendrucks aus der Speichereinheit (60) abzurufen, **dadurch gekennzeichnet, dass** die Betriebszustandsgrößen für die Durchführung bestimmter hydraulischer Arbeitsfunktionen des landwirtschaftlichen Anbaugeräts charakteristische Steuerventilstellungen bzw. -sequenzen wiedergeben.

2. Einrichtung nach Anspruch 1, **dadurch gekennzeichnet, dass** die Betriebszustandsgrößen auf bestimmte Arbeitsabläufe hinweisende Bedienanforderungen des Fahrers oder eines Fahrerassistenzsystems wiedergeben.

3. Einrichtung nach Anspruch 1 oder 2, **dadurch gekennzeichnet, dass** es sich bei der äußeren Steuergröße um eine Lastgröße handelt, die eine an zugehörigen Achsgruppen (68, 70) des Fahrzeugsystems auftretende Achslast charakterisiert.

4. Einrichtung nach Anspruch 3, **dadurch gekennzeichnet, dass** die Kontrolleinheit (46) die Lastgröße auf Grundlage lastspezifischer Fahrzeuggrößen ableitet.

5. Einrichtung nach wenigstens einem der vorhergehenden Ansprüche, **dadurch gekennzeichnet, dass** die äußere Steuergröße durch auf den wenigstens einen Fahrzeugreifen (20a, 20b, 22a, 22b) bezogene Reifeneigenschaften charakterisiert ist.

6. Einrichtung nach wenigstens einem der vorhergehenden Ansprüche, **dadurch gekennzeichnet, dass** die Kontrolleinheit (46) die Betriebszustandsklassifizierung aus Betriebszustandsgrößen ableitet, die für das Auftreten von Betriebszuständen des Fahrzeugsystems mit einem hierfür spezifischen Reifeninnendruck charakteristisch sind.

7. Einrichtung nach wenigstens einem der vorhergehenden Ansprüche, **dadurch gekennzeichnet, dass** die Kontrolleinheit (46) aus dem für den Reifeninnendruck berechneten Sollwert eine Handlungsempfehlung für die manuelle Betätigung der Reifenfüllanlage (28) ableitet und über eine Benutzerschnittstelle (52) ausgibt.

8. Einrichtung nach wenigstens einem der Ansprüche 1 bis 6, **dadurch gekennzeichnet, dass** die Kontrolleinheit (46) aus dem für den Reifeninnendruck berechneten Sollwert einen Steuerbefehl zur fahrerunabhängigen Betätigung der Reifenfüllanlage (28) erzeugt.

9. Fahrzeugsystem, insbesondere bestehend aus einem landwirtschaftlichen Traktor und einem daran angebrachten landwirtschaftlichen Anbaugerät, mit einer Einrichtung (10) nach wenigstens einem der vorhergehenden Ansprüche.

## Claims

1. Device for monitoring tyre pressure of a vehicle system comprising an agricultural tractor and an agricultural implement, having at least one vehicle tyre (20a, 20b, 20c, 20d), which communicates with a tyre inflation system (28) for adapting a tyre internal pressure, and a control unit (46), which calculates a target value to be maintained for the tyre internal pressure in accordance with at least one external control variable, the control unit (46) adapting the calculated target value as a function of an operating state classification derived from operating state variables of the vehicle system, the control unit (46) determining a geo-position of the vehicle system that is correlated with the derived operating state classification and storing the latter together with the operating state classification in a memory unit (60) in order to retrieve the associated operating state classification from the memory unit (60) for the purpose of anticipatory adaptation of the target value of the tyre internal pressure when a renewed approach of the vehicle system to the stored a geo-position is detected, **characterized in that** the operating state variables reproduce characteristic control valve settings or sequences for the performance of specific hydraulic working functions of the agricultural implement.

2. Device according to Claim 1, **characterized in that** the operating state variables reproduce operating requirements of the driver or of a driver assistance system that point to specific working sequences.

3. Device according to Claim 1 or 2, **characterized in that** the external control variable is a load variable which characterizes an axle load occurring on associated axle groups (68, 70) of the vehicle system.

4. Device according to Claim 3, **characterized in that** the control unit (46) derives the load variable on the basis of load-specific vehicle variables.

5. Device according to at least one of the preceding claims, **characterized in that** the external control variable is **characterized by** tyre properties based on the at least one vehicle tyre (20a, 22a, 22b, 20d) .

6. Device according to at least one of the preceding claims, **characterized in that** the control unit (46) derives the operating state classification from operating state variables which are characteristic of the occurrence of operating states of the vehicle system with a tyre internal pressure that is specific for this purpose.

7. Device according to at least one of the preceding claims, **characterized in that** the control unit (46) derives a handling recommendation for the manual actuation of the tyre inflation system (28) from the target value calculated for the tyre internal pressure, and outputs the said recommendation via a user interface (52).

8. Device according to at least one of Claims 1 to 6, **characterized in that** the control unit (46) generates a control command for driver-independent actuation of the tyre inflation system (28) from the target value calculated for the tyre internal pressure.

9. Vehicle system, in particular comprising an agricultural tractor and an agricultural implement attached thereto, having a device (10) according to at least one of the preceding claims.

## Revendications

1. Dispositif de surveillance de la pression de gonflage de pneumatique d'un système de véhicule comprenant un tracteur agricole et un outil agricole, ledit dispositif comprenant au moins un pneumatique de véhicule (20a, 20b, 22a, 22b), qui communique avec une installation de gonflage de pneumatique (28) pour régler la pression interne du pneumatique, et une unité de commande (46) qui calcule une valeur de consigne, à respecter pour la pression interne du pneumatique, en fonction d'au moins une grandeur de commande externe, l'unité de commande (46) ajustant la valeur de consigne calculée en fonction d'une classification d'état de fonctionnement dérivée de grandeurs d'état de fonctionnement du système de véhicule, l'unité de commande (46) déterminant une position géographique du système de véhicule en corrélation avec la classification d'état de fonctionnement dérivée et mémorisant ladite position géographique conjointement avec la classification d'état de fonctionnement dans une unité de mémorisation (60) afin de récupérer dans l'unité de mémorisation (60) la classification d'état de fonctionnement associée dans le but d'anticiper l'adaptation de la valeur de consigne de la pression interne du pneumatique lorsqu'il est détecté que le système de véhicule s'approche à nouveau de la position géographique mémorisée, **caractérisé en ce que** les grandeurs d'état de fonctionnement pour l'exécution de fonctions de travail hydrauliques déterminées de l'outil agricole représentent des positions ou des séquences caractéristiques de vannes de commande.

2. Dispositif selon la revendication 1, **caractérisé en ce que** les grandeurs d'état de fonctionnement représentent des exigences de fonctionnement du conducteur ou d'un système d'assistance à la conduite, lesquelles exigences indiquent des phases de travail déterminées.

3. Dispositif selon la revendication 1 ou 2, **caractérisé en ce que** la grandeur de commande externe est une dimension de charge qui caractérise une charge d'essieu apparaissant au niveau de groupes d'essieux associés (68, 70) du système de véhicule.

4. Dispositif selon la revendication 3, **caractérisé en ce que** l'unité de commande (46) déduit la dimension de charge sur la base de dimensions de véhicule spécifiques à la charge.

5. Dispositif selon l'une au moins des revendications précédentes, **caractérisé en ce que** la grandeur de commande externe est **caractérisée par** des propriétés de pneumatique concernant au moins un pneumatique de véhicule (20a, 20b, 22a, 22b).

6. Dispositif selon l'une au moins des revendications précédentes, **caractérisé en ce que** l'unité de commande (46) déduit la classification de l'état de fonctionnement à partir de grandeurs d'état de fonctionnement qui sont caractéristiques de l'apparition d'états de fonctionnement du système de véhicule avec une pression interne de pneumatique spécifique à ceux-ci.

7. Dispositif selon l'une au moins des revendications précédentes, **caractérisé en ce que** l'unité de commande (46) déduit, à partir de la valeur de consigne calculée pour la pression interne du pneumatique, une recommandation d'action pour l'actionnement manuel de l'installation de gonflage de pneumatique (28) et la délivre en sortie par le biais d'une interface utilisateur (52).

8. Dispositif selon l'une au moins des revendications 1 à 6, **caractérisé en ce que** l'unité de commande (46) génère une instruction de commande du fonctionnement, indépendant du conducteur, de l'installation de gonflage de pneumatique (28) à partir de la valeur de consigne calculée pour la pression interne du pneumatique.

9. Système de véhicule, comprenant en particulier un tracteur agricole et un outil agricole monté sur celui-ci, le système de véhicule étant équipé d'un dispositif (10) selon l'une au moins des revendications précédentes.
